# EUROPEAN PATENT SPECIFICATION

(11) **EP 4 497 487 B1**
(45) Date of publication and mention of the grant of the patent: **10.06.2026**
(21) Application number: 24182755.9
(22) Date of filing: 18.06.2024
(51) Int. Cl.: B01D 45/08

(54) **GAS-LIQUID SEPARATOR**
GAS-FLÜSSIGKEITSABSCHEIDER
SÉPARATEUR GAZ-LIQUIDE

(30) Priority: 28.07.2023 JP 2023123239
(43) Date of publication of application: 29.01.2025
(73) Proprietor: Aisin Corporation, Kariya, Aichi 448-8650 (JP)
(72) Inventor: OKUNO, Hitoshi, Kariya, 448-8650 (JP); ANDO, Masanori, Kariya, 448-8650 (JP)
(74) Representative: TBK

(56) References cited:
- CN-A- 114 865 012
- CN-B- 103 732 871
- CN-U- 217 740 584
- US-A1- 2022 226 753

## Description

### TECHNICAL FIELD

This invention generally relates to a gas-liquid separator.

### BACKGROUND DISCUSSION

JP 2022 112483 A and its family member US 2022/226753 Al describe a gas-liquid separator that separates water contained in anode off-gas discharged from an anode of a fuel cell.

JP 2022 112483 A and US 2022/226753 Al disclose a configuration in which the gas-liquid separator separates water by delivering water-containing gas supplied through an inlet port formed in a lower part of a housing in a vertical direction inside the housing by using a passage member, causing the water-containing gas to come into contact with a plurality of separation blades in a gas-liquid separation section arranged in an upper part of the housing, and then generating a swirling flow.

The gas-liquid separator described in JP 2022 112483 A and US 2022/226753 Al generates the swirling flow for swirling the water-containing gas while reducing pressure loss in the gas-liquid separation section, causes the water-containing gas to come into contact with a plurality of the separation blades, and thus improves separation performance.

However, when the inlet port is arranged in the lower part of the housing, a passage (a passage member) through which gas flows vertically is required in a configuration in which a space that allows the water-containing gas to swirl is formed in the upper part of the housing and a plurality of the separation blades are provided. This poses a concern about possible pressure loss in the gas-liquid separation section.

A need thus exists for a gas-liquid separator that can achieve separation of water from water-containing gas while reducing pressure loss in a gas-liquid separation section.

### SUMMARY

A gas-liquid separator according to this invention includes the features specified in claim 1.

According to this configuration, the water-containing gas introduced into the inlet port is guided by the sloping guide section in the upward direction above the water storage space and collides with the comb-like contact surface of the separation plate, resulting in separation of water. In addition, this configuration enables excellent separation of water without requiring, for example, a space for swirling the water-containing gas as a swirling flow, a plurality of blade-like members with which the swirling flow comes into contact, and a passage through which the gas flows vertically (a passage member to be provided separately). Thus, a gas-liquid separator is configured, which can achieve separation of water from water-containing gas while reducing pressure loss in a gas-liquid separation section.

### BRIEF DESCRIPTION OF THE DRAWINGS

The foregoing and additional features and characteristics of this invention will become more apparent from the following detailed description considered with the reference to the accompanying drawings, wherein:
FIG. 1 is a perspective view of a gas-liquid separator in its entirety;
FIG. 2 is a longitudinal sectional front view of the gas-liquid separator;
FIG. 3 is a longitudinal sectional rear view of the gas-liquid separator;
FIG. 4 is a perspective view illustrating an internal structure of an upper housing;
FIG. 5 is a perspective view illustrating an internal structure of a lower housing;
FIG. 6 is a sectional diagram of the gas-liquid separator illustrated in FIG. 2 taken along line VI-VI;
FIG. 7 is a perspective view of a gas-liquid separator according to an alternative embodiment (a) in its entirety;
FIG. 8 is a longitudinal sectional front view of the gas-liquid separator according to the alternative embodiment (a);
FIG. 9 is a transverse sectional plan view of a housing according to the alternative embodiment (a); and
FIG. 10 is a perspective view illustrating an internal structure of an upper housing according to the alternative embodiment (a).

### DETAILED DESCRIPTION

Embodiments of a gas-liquid separator according to this invention are described below based on the drawings. This invention is not limited to the embodiments to be described below.

### [Basic Configuration]

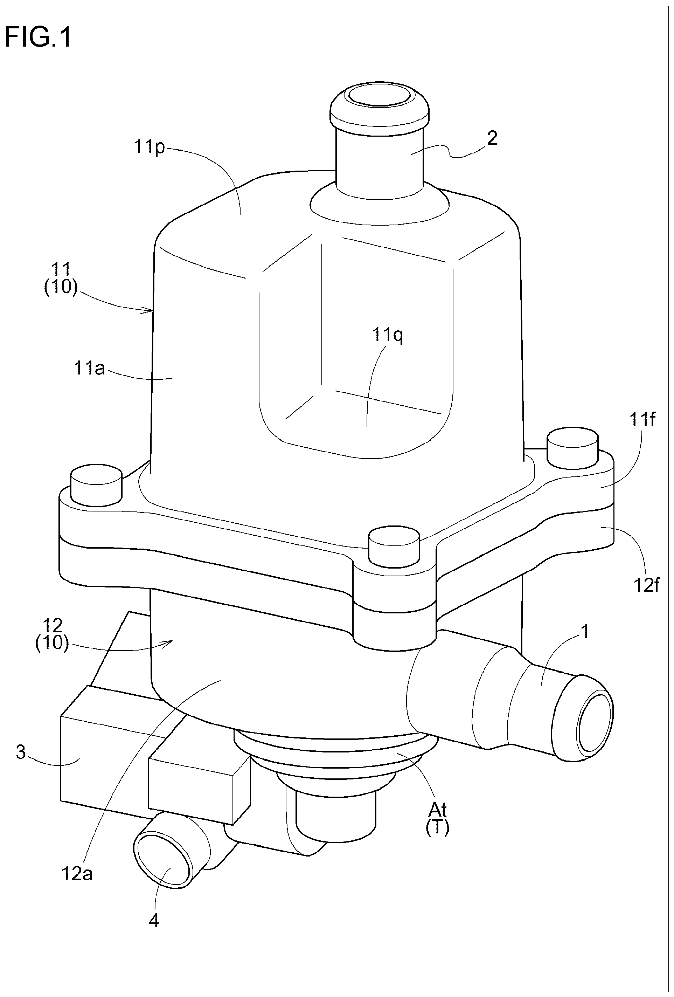

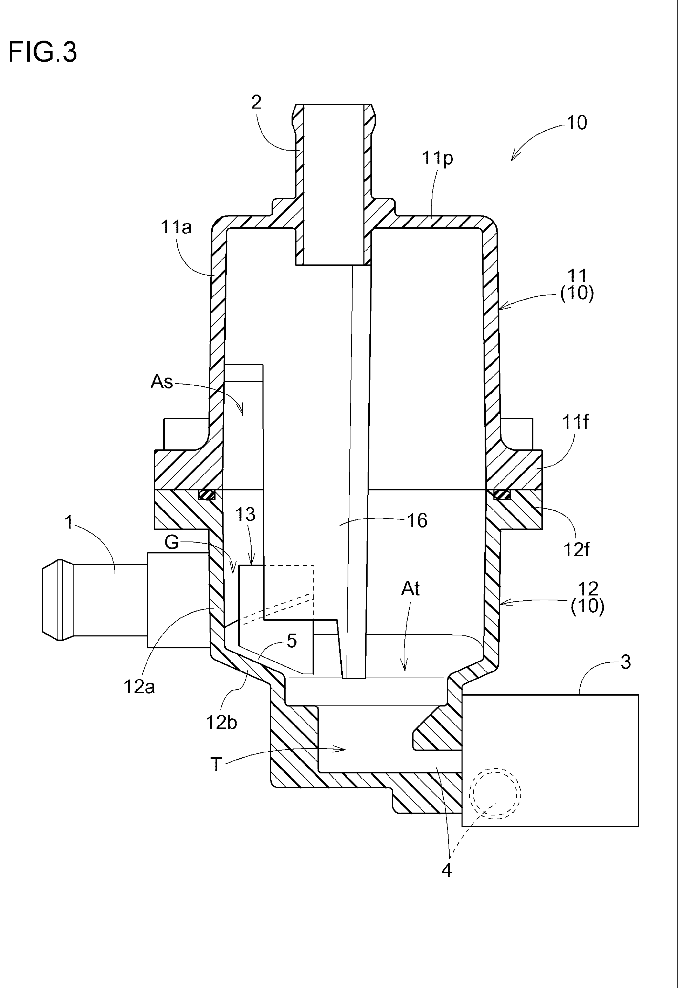

As illustrated in FIG. 1 to FIG. 3, a gas-liquid separator A is configured by including: an inlet port 1 connected to a side of a plastic housing 10; an outlet port 2 on an upper face of the housing 10; a gas-liquid separation section As and a water storage unit At inside the housing 10, the gas-liquid separation section As being configured in such a way as to separate water from anode off-gas (an example of water-containing gas), the water storage unit At being configured in such a way as to collect the water separated in the gas-liquid separation section in a water storage space T; and an electromagnetically opening and closing valve 3 on an outer surface of a bottom portion of the housing 10, the valve being configured in such a way as to discharge the water into the water storage unit At.

In this gas-liquid separator A, the inlet port 1 communicates with a separation space S inside the housing 10 while the outlet port 2 communicates with a space, to which dehydrated gas or the like delivered from the separation space S is supplied, in an internal space of the housing 10.

The gas-liquid separator A functions to introduce anode off-gas (water-containing gas) discharged from a fuel cell of a fuel cell vehicle (FCV) through the inlet port 1, separate water contained in the anode off-gas, collect the water in the water storage unit At, and discharge dehydrated gas or the like generated after the water is separated through the outlet port 2. In the description below, the water-containing gas after the water is separated by the gas-liquid separator A may be referred to as "dehydrated gas or the like" since it slightly contains water.

The dehydrated gas or the like discharged from the gas-liquid separator A contains unreacted hydrogen gas. For this reason, the fuel cell vehicle (FCV) uses the gas-liquid separator A to supply the dehydrated gas or the like to a passage on a side of an anode of the fuel cell and achieves efficient reuse of the hydrogen gas.

### [Housing]

As illustrated in FIG. 1 to FIG. 3, the housing 10 is constructed from an upper housing 11 and a lower housing 12. The housing 10 is integrally constructed by fastening an upper flange 11f formed in the upper housing 11 to a lower flange 12f formed in the lower housing 12 with a plurality of bolts.

The upper housing 11 includes an upper sidewall 11a that defines all circumferences of the upper housing 11 and also includes an outlet port 2 that protrudes upward from a top wall 11p. The upper housing 11 has a gas-liquid separation section As arranged underneath a middle wall 11q located below the top wall 11p.

The lower housing 12 includes a lower sidewall 12a that defines all circumferences of the lower housing 12 and also includes an inlet port 1 that protrudes horizontally from the lower sidewall 12a. The lower housing 12 includes a sloping guide section 13 that guides the water-containing gas delivered through the inlet port 1 in an upward direction above the water storage space T, and a water storage unit At for storing water in the water storage space T is formed in a bottom of the lower housing 12.

The lower housing 12 includes a funnel-shaped bottom wall 12b the lower area of which has less sectional area. The water storage unit At includes the water storage space T in the funnel-shaped bottom wall 12b and a discharge passage 4 is formed in a lower end of the water storage unit At. The electromagnetically opening and closing valve 3 for opening and closing the discharge passage 4 is provided at an outer surface of a bottom portion of the lower housing 12.

### [Gas-liquid separation section]

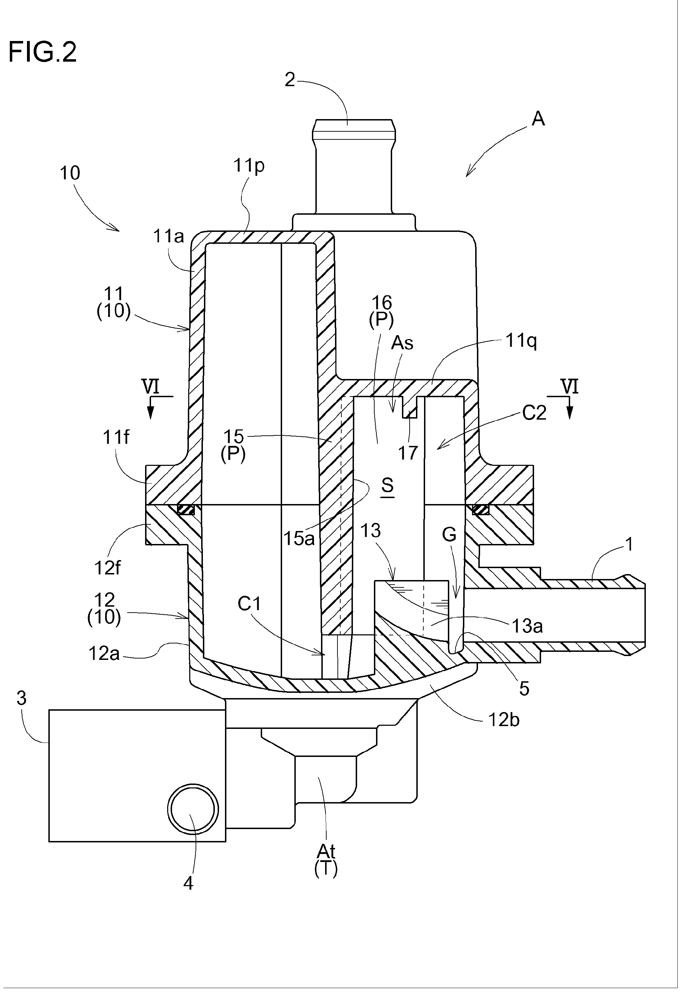

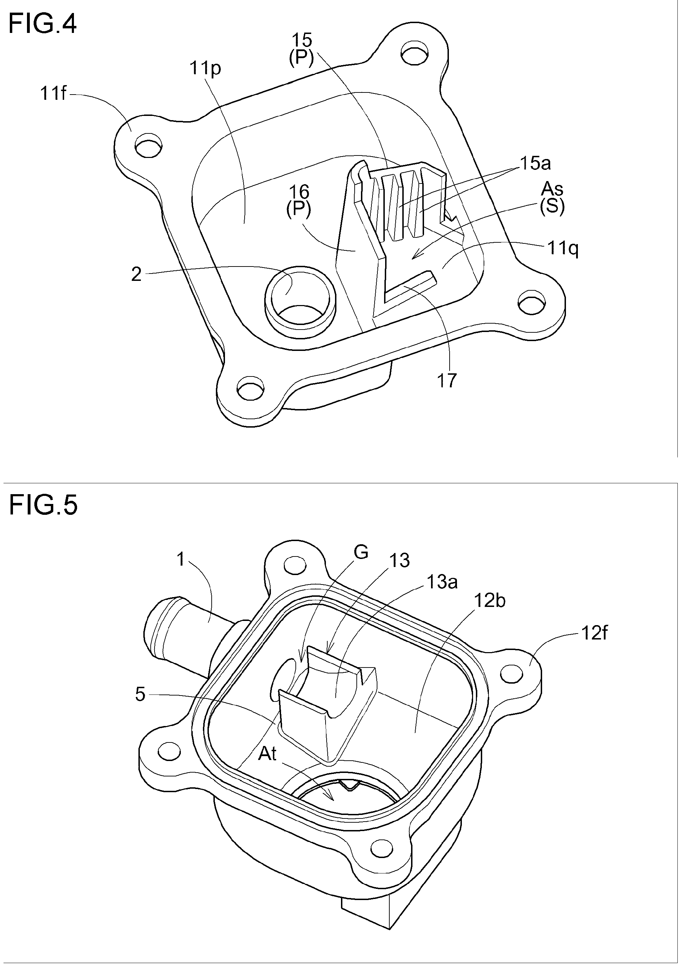

The gas-liquid separation section As includes, as illustrated in FIG. 2 and FIG. 5, the sloping guide section 13 that guides the water-containing gas in the upward direction above the water storage space T and includes, as illustrated in FIG. 2, FIG. 4, and FIG. 6, a separation plate P having a comb-like contact surface that separates water contained in the water-containing gas by coming into contact with the water-containing gas.

The separation plate P is constructed from a first main portion 15 that is a wall extending vertically and a second main portion 16 that is a wall extending vertically, and the main portion (a superordinate concept to the first main portion 15 and the second main portion 16) is formed in such a way as to protrude downward from an inner surface of the middle wall 11q of the housing 10.

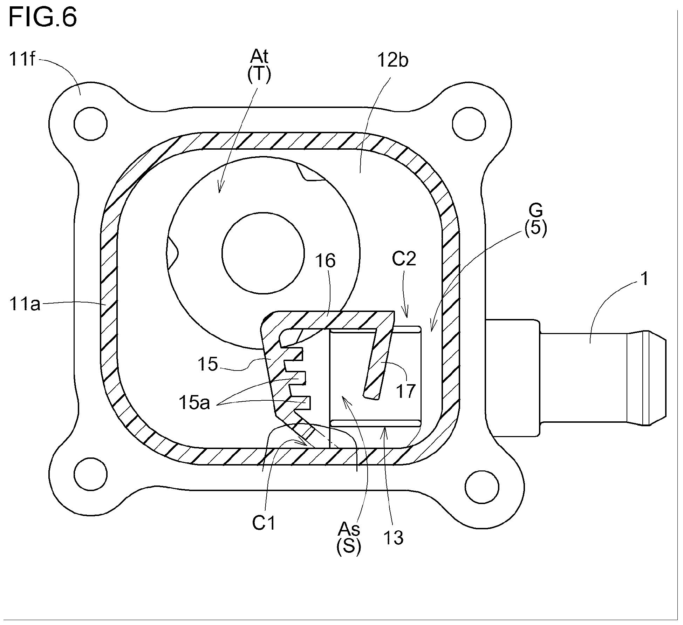

An upper end of the main portion (the first main portion 15 and the second main portion 16) is connected to the inner surface of the middle wall 11q of the upper housing 11 and a lower end of the main portion is located in an internal space of the lower housing 12 in a manner inserted therein. As illustrated in FIG. 6, the first main portion 15 and the second main portion 16 are arranged in such a way as to surround the sloping guide section 13 in a plan view.

The first main portion 15 extends in a vertical direction with a comb-like shape constructed of a plurality of convex portions 15a that protrudes toward the sloping guide section 13 in a plan view and that extends along the vertical direction, the comb-like shape serving as a contact surface that comes into contact with the water-containing gas in a collision. The comb-like contact surface may be also formed on the second main portion 16, not only on the first main portion 15.

As illustrated in FIG. 6, the wall of the first main portion 15 connects to the wall of the second main portion 16 at a substantially right angle in a plan view. In the gas-liquid separation section As, a separation space S is formed in a region extending in a vertical direction, the region being surrounded by the first main portion 15, the second main portion 16, and the sidewall (a superordinate concept to the upper sidewall 11a and the lower sidewall 12a) of the housing 10. The sloping guide section 13 is arranged in such a way as to overlap the separation space S in a plan view.

As illustrated in FIG. 2 and FIG. 5, the sloping guide section 13 includes a guide surface 13a that is arc-shaped in a side view and that opens upward in order to guide the water-containing gas supplied in a horizontal direction through the inlet port 1 in an upward direction. The sloping guide section 13 is integrally formed in the bottom wall 12b in such a way as to protrude upward from the bottom wall 12b in the internal space of the lower housing 12.

The first main portion 15 is arranged in such a way as to directly come into contact with the water-containing gas guided by the guide surface 13a, and it is intended to separate water by causing the water-containing gas that has been guided by the guide surface 13a and flows upward to flow along a plurality of the convex portions 15a to come into contact with the convex portions 15a.

The contact surface of the first main portion 15 has an enlarged surface area owing to a plurality of the convex portions 15a and a plurality of the convex portions 15a extends along the vertical direction, and therefore, the first main portion 15 does not exert a resisting force on the water-containing gas when the water-containing gas flows upward.

As illustrated in FIG. 2 and FIG. 6, the gas-liquid separation section As includes a first void space C1 (an example of a discharge space) between the top wall 11p and the bottom wall 12b of the housing 10 beside an end of the first main portion 15 opposite to the second main portion 16. The gas-liquid separation section As includes a second void space C2 (an example of the discharge space) between the top wall 11p and the bottom wall 12b of the housing 10 beside an end of the second main portion 16 opposite to the first main portion 15.

As illustrated in FIG. 2, FIG. 4, and FIG. 6, the gas-liquid separation section As includes a collision plate 17 in the separation plate P that protrudes from the inner surface of the middle wall 11q (an upper inner surface of the housing 10) toward the separation space S (downward) in a manner extending from the second main portion 16. The collision plate 17 extends from the end of the second main portion 16 opposite to the first main portion 15 obliquely to the sidewall of the housing 10 in such a way as to be away from the sidewall of the housing 10.

With this configuration, the gas-liquid separator A separates water contained in the water-containing gas supplied through the inlet port 1 by causing the water-containing gas to collide with a plurality of the convex portions 15a of the first main portion 15. The gas-liquid separator A delivers the dehydrated gas or the like generated after the water is separated to the outside of the separation space S through the first void space C1 and the second void space C2. In other words, the gas-liquid separator A causes the dehydrated gas or the like to flow out of the separation space S through both sides of the gas-liquid separation section As and ultimately discharges the dehydrated gas or the like through the outlet port 2.

As illustrated in FIG. 2, in the gas-liquid separation section As, a gap G is formed between an inner surface of the lower sidewall 12a of the lower housing 12 where the inlet port 1 is formed and the sloping guide section 13. This gap G prevents back-flow of the water-containing gas, for example, when upstream pressure of the inlet port 1 temporarily decreases or when pressure inside the housing 10 temporarily increases.

In the gas-liquid separator A, the sloping guide section 13 is arranged in a lower part of the separation space S, which may lead to a portion of the water separated from the water-containing gas flowing into the gap G. Therefore, as illustrated in FIG. 2, FIG. 3, and FIG. 5, a collecting passage 5 is formed for delivering the water that has entered the gap G into the water storage unit At in a region communicating with a bottom of the gap G.

This collecting passage 5 uses a slope of the bottom wall 12b of the lower housing 12 and discharges the water separated from the water-containing gas to the water storage unit At. The electromagnetically opening and closing valve 3 remains to be in a closed state in a non-energized condition and causes the discharge passage 4 to be communicated by energization and discharges the water stored in the water storage unit At.

### [Advantageous effects of the present embodiment]

Thus, the gas-liquid separator A guides the water-containing gas introduced into the inlet port 1 in the upward direction by causing the water-containing gas to come into contact with the guide surface 13a of the sloping guide section 13 inside the housing 10, and the water-containing gas comes into contact with the comb-like contact surface in the gas-liquid separation section As when flowing upward in the separation space S, resulting in separation of water.

Specifically, the separation space S regulates flow of the water-containing gas with the first main portion 15 and the second main portion 16, both of which are walls extending vertically, preventing a problem of the water-containing gas leaking out from the separation space S in a short-circuited manner.

In addition, the gas-liquid separation section As causes the water-containing gas delivered in the upward direction by the sloping guide section 13 to come into contact with the surfaces of a plurality of the convex portions 15a when the water-containing gas flows upward along the separation space S, thereby separating water.

In other words, the comb-like contact surface is constructed of a plurality of the convex portions 15a provided in the first main portion 15, and therefore has a large contact surface and improves the separation performance. The gas-liquid separation section As enables downsizing to be achieved compared to a configuration, for example, that aims to separate water by generating a swirling flow and causing the swirling flow to come into contact with a plurality of separation blades or the like.

Water droplets generated by the water-containing gas coming into contact with surfaces of a plurality of the convex portions 15a easily flows along the surfaces of the convex portions 15a downward to be received by the bottom wall 12b of the lower housing 12, and flows into the water storage unit At due to the slope of the bottom wall 12b.

The dehydrated gas or the like generated after the water is separated in the separation space S flows into the first void space C1 and the second void space C2 to be ultimately discharged from the outlet port 2.

The gas-liquid separation section As includes the collision plate 17 that protrudes downward from an undersurface of the middle wall 11q, which prevents the water-containing gas from leaking out when the water-containing gas flowing upward in the separation space S arrives at the middle wall 11q and flows toward the second void space C2 by causing the water-containing gas to come into contact with the collision plate 17, enabling separation of water contained in the water-containing gas.

In the gas-liquid separation section As, the gap G is formed between the sloping guide section 13 and the inner surface of the lower sidewall 12a of the lower housing 12, and the collecting passage 5 is formed in the region communicating with the bottom of the gap G. Therefore, back-flow of the water-containing gas inside the housing 10 into the inlet port 1 is prevented, and when the water separated from the water-containing gas flows into the gap G, the water is supplied through the collecting passage 5 to the water storage unit At and stored in the water storage unit At.

### [Alternative embodiment]

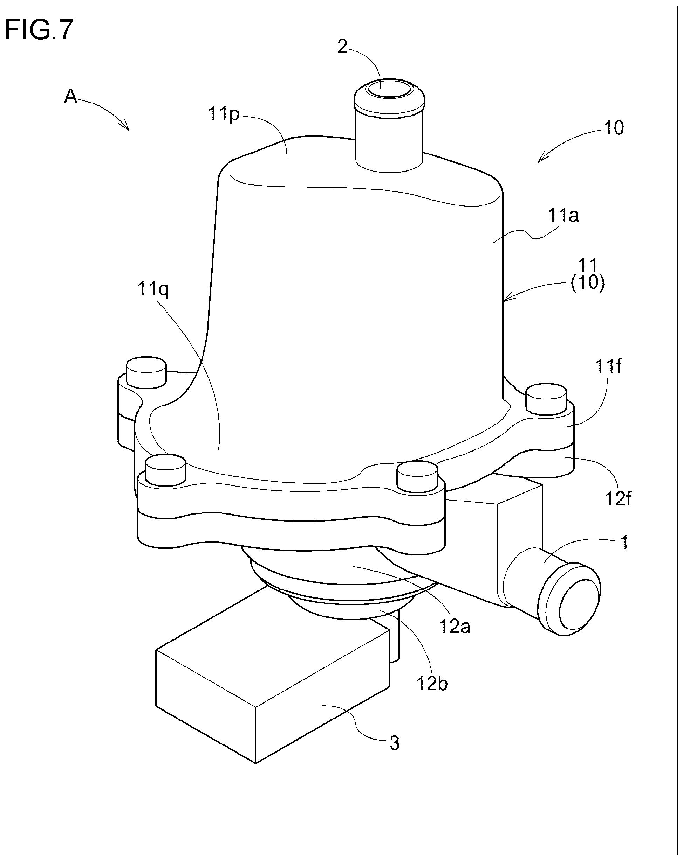

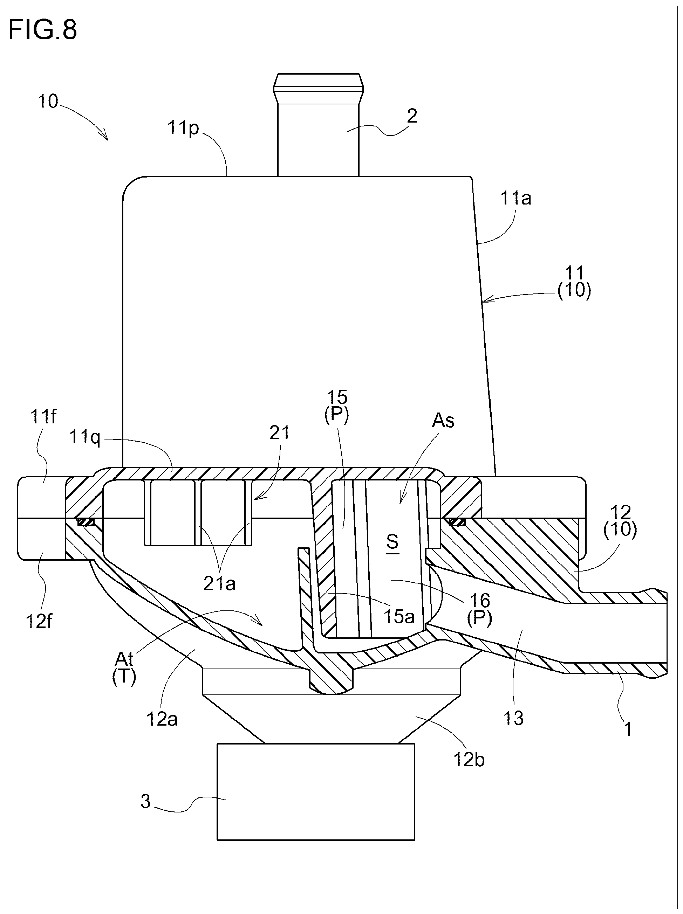

This invention may be implemented not only in the embodiment described above, but with a configuration to be described below (note that a component having the same function as that in the embodiment described above is assigned with the same reference numeral or sign).
(a) As illustrated in FIG. 7 to FIG. 9, a gas-liquid separator A is configured, the gas-liquid separator A including: an inlet port 1 connected to a side of a plastic housing 10; an outlet port 2 on an upper face of the housing 10; a gas-liquid separation section As and a water storage unit At inside the housing 10, the gas-liquid separation section As being configured in such a way as to separate water from anode off-gas (an example of water-containing gas), the water storage unit At being configured in such a way as to collect the water separated in the gas-liquid separation section in a water storage space T; and an electromagnetically opening and closing valve 3 on an outer surface of a bottom portion of the housing 10, the valve being configured in such a way as to discharge the water into the water storage unit At.

The gas-liquid separator A in this alternative embodiment (a) is supplied with anode off-gas (water-containing gas) discharged from a fuel cell of a fuel cell vehicle (FCV) into the inlet port 1, similarly to the gas-liquid separator A in the embodiment described above, separates water contained in the anode off-gas, and discharges dehydrated gas or the like generated after the water is separated through the outlet port 2.

The housing 10 of the gas-liquid separator A in this alternative embodiment (a) is constructed from an upper housing 11 and a lower housing 12, and the upper housing 11 and the lower housing 12 are integrated by fastening an upper flange 11f to a lower flange 12f with a plurality of bolts.

The gas-liquid separation section As includes a sloping guide section 13 that guides the water-containing gas in an upward direction above the water storage space T and a separation plate P having a comb-like contact surface that separates water contained in the water-containing gas by coming into contact with the water-containing gas. The sloping guide section 13 is integrally formed in the lower housing 12 as a tubular passage that guides the water-containing gas in an obliquely upward direction, and supplies the water-containing gas to a separation space S having a vertically long dimension.

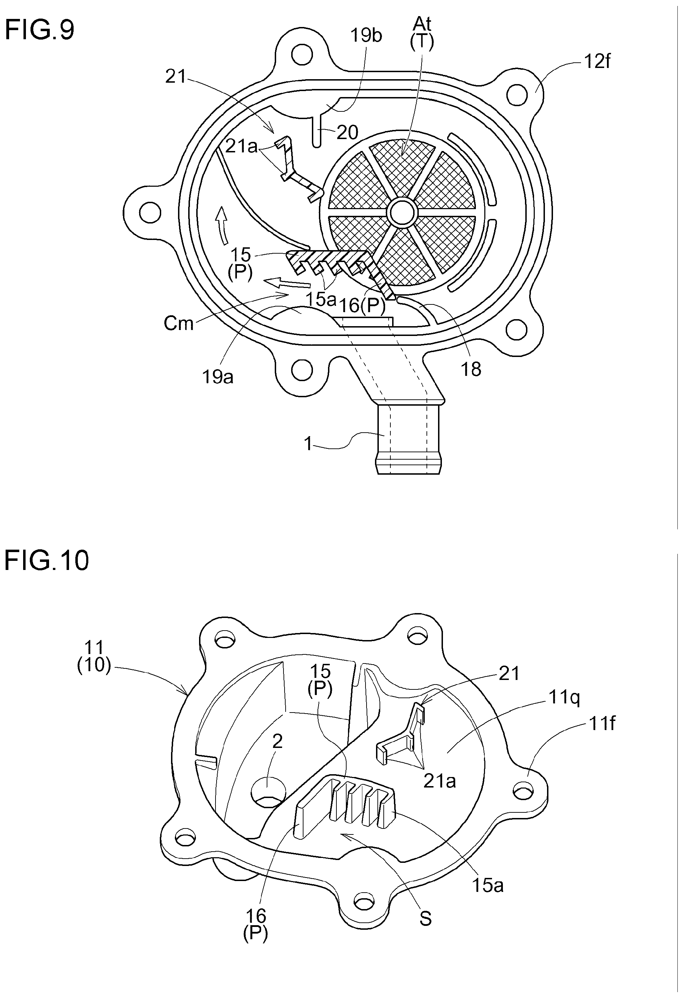

As illustrated in FIG. 9 and FIG. 10, the separation plate P includes a first main portion 15 that is a wall extending vertically and a second main portion 16 that is a wall extending vertically. In the separation plate P, the main portion (a superordinate concept to the first main portion 15 and the second main portion 16) is formed in such a way as to protrude downward from an inner surface of a middle wall 11q of the housing 10.

As illustrated in FIG. 9, the wall of the first main portion 15 connects to the wall of the second main portion 16 at a substantially large angle (obtuse angle) in a plan view. The first main portion 15 is arranged in such a way as to directly come into contact with the water-containing gas guided by the sloping guide section 13 and has a comb-like contact surface.

The comb-like contact surface of the first main portion 15 is formed by a plurality of convex portions 15a that protrudes toward the sloping guide section 13 in a plan view and that extends along a vertical direction. The gas-liquid separation section As includes a guide wall 18 formed between a protruding end of the second main portion 16 (the end opposite to the first main portion 15) and a lower sidewall 12a.

The separation space S is formed in an internal space of the lower housing 12 in a region partitioned by the first main portion 15, the second main portion 16, and the guide wall 18. In addition, as illustrated in FIG. 9, a first bulging portion 19a is formed in the lower sidewall 12a of the lower housing 12 at a position near an end of the first main portion 15 (the end opposite to the second main portion 16).

As illustrated in FIG. 9, in the lower housing 12, an auxiliary collision wall 21 is arranged at a position toward which the water-containing gas flows clockwise, and a second bulging portion 19b bulging inward in the housing 10 is formed at a downstream position relative to this auxiliary collision wall 21. In addition, a protruding wall 20 protruding inward from the second bulging portion 19b is formed in the housing 10.

The auxiliary collision wall 21 is arranged in such a way that a lower end portion thereof protrudes toward the internal space of the lower housing 12. The center of the auxiliary collision wall 21 in a width direction thereof in a plan view protrudes upstream in the flow direction of the water-containing gas and protruding portions 21a are formed in the auxiliary collision wall 21 in the center and both ends thereof in the width direction.

### [Flow of gas]

In the gas-liquid separation section As in the alternative embodiment (a), the water-containing gas is guided through the inlet port 1 toward the sloping guide section 13 and collides with the first main portion 15 in the separation space S. Water separated from the water-containing gas is caused to fall to an inner surface of the bottom wall 12b of the lower housing 12 and the water is guided from the bottom wall 12b to the water storage unit At and stored in the water storage space T.

The water-containing gas that has passed the gas-liquid separation section As passes through a main void space Cm after the water is separated and swirls clockwise in a plan view as indicated with an arrow in FIG. 9 along an inner surface (sidewall) of the housing 10. The water-containing gas then moves along an internal wall (the internal wall consisting of the upper sidewall 11a and the lower sidewall 12a) of the housing 10 and reaches the auxiliary collision wall 21.

Since the water-containing gas contains a slight amount of water, the water is separated from the water-containing gas when the water-containing gas collides with the auxiliary collision wall 21 and the water that has been separated is caused to fall to the inner surface of the bottom wall 12b of the lower housing 12 and stored in the water storage unit At. The dehydrated gas or the like generated after the water is separated is discharged to the outside from the outlet port 2.

In this manner, the gas-liquid separation section As in the alternative embodiment (a) causes the water-containing gas delivered in the obliquely upward direction by the sloping guide section 13 to come into contact with the surfaces of a plurality of the convex portions 15a when the water-containing gas flows upward along the separation space S, thereby separating the water. The gas-liquid separation section As has a configuration in which the water-containing gas is delivered in the upward direction and the water is separated when the water-containing gas flows upward in this manner, and therefore, pressure loss is reduced compared to a configuration, for example, that aims to separate water by generating a swirling flow using a vertical gas passage in an upper part of the housing and causing the swirling flow to come into contact with a plurality of separation blades or the like.
(b) As described in the aforementioned embodiment, a convex portion 15a is formed in the second main portion 16. In this alternative embodiment (b), the convex portion may be formed in each of the first main portion 15 and the second main portion 16, which enables excellent separation of water.
(c) When a plurality of convex portions 15a constituting the comb-like contact surface of the gas-liquid separation section As is used, one or more of the convex portions 15a may extend obliquely and the surface thereof may be a roughened surface.

Note that the configurations disclosed in the embodiments described above (including the alternative embodiments, which also applies in the following) may be combined with the configuration disclosed in another embodiment and that the embodiments disclosed in the present description are merely exemplary and embodiments of this invention are not limited to those embodiments, and modifications may be appropriately made to those embodiments.

In the embodiments that have been described above, a configuration including the features of claim 1 is conceived.

According to this configuration, the water-containing gas introduced through the inlet port 1 into the housing 10 is guided by the sloping guide section 13 in the upward direction above the water storage space T and comes into contact with the comb-like contact surface of the separation plate P, resulting in separation of water. In addition, this configuration enables excellent separation of water without requiring, for example, a space for swirling the water-containing gas to form a swirling flow, a plurality of blade-like members with which the swirling flow comes into contact, or a passage through which the gas flows vertically (a passage member to be provided separately).

According to this configuration, the water-containing gas that has come into contact with the separation plate P flows, after the water is separated due to contact with the separation plate P, into the discharge spaces (the first void space C1 and the second void space C2) positioned beside the opposite ends of the separation plate P, and the water-containing gas after separation of the water is discharged to the outside of the housing 10 while preventing inconvenience in which the water-containing gas flows in a short-circuited manner without coming into contact with the separation plate P.

In the gas-liquid separator A according to this configuration, the separation plate P preferably includes the main portion (the first main portion 15 and the second main portion 16) that protrudes from the upper inner surface of the housing 10 toward the water storage space T in such a way as to surround the sloping guide section 13; and a plurality of the convex portions 15a that protrudes from the main portion toward the sloping guide section 13 and that extends along a vertical direction, and the collision plate 17 configured in such a way as to collide with the water-containing gas that flows out into the discharge space is preferably formed on the upper inner surface of the housing 10 and extends from the separation plate P.

According to this configuration, the water-containing gas delivered by the sloping guide section 13 in the upward direction inside the housing 10 comes into contact with a plurality of the convex portions 15a that protrudes from the main portion (the first main portion 15 and the second main portion 16) of the separation plate P toward the sloping guide section 13, resulting in separation of water. The water-containing gas that flows toward the upper inner surface of the housing 10 collides with the collision plate 17 when the water-containing gas flows into the discharge space and the water is separated, thereby enabling water separation performance to be kept at a high level.

In the gas-liquid separator A according to this configuration, the gap G is preferably formed between the inner surface of the housing 10 where the inlet port 1 is formed and the sloping guide section 13 and the sloping collecting passage 5 for discharging water in the gap G into the water storage space T is preferably provided.

According to this configuration, for example, when a situation in which the water-containing gas flows from the internal space of the housing 10 into the inlet port 1 occurs, back-flow into the inlet port 1 is prevented by causing the water-containing gas inside the housing 10 to flow into the region including the gap G. In addition, when water is present in the gap G, the water may be discharged through the collecting passage 5 into the water storage space T.

### [Industrial Applicability]

This invention may be used for a gas-liquid separator.

## Claims

1. A gas-liquid separator comprising:
a housing (10) having a water storage space (T) in a bottom portion;
an inlet port (1) that is connected to a lower part of the housing (10) and through which water-containing gas is introduced;
a sloping guide section (13) that guides the water-containing gas supplied through the inlet port (1) into the housing (10) in an upward direction above the water storage space (T); and
a separation plate (P) including a comb-like contact surface, wherein
the comb-like contact surface is formed on a main portion (15, 16) of the separation plate (P), extends in a vertical direction, and is configured in such a way as to separate water contained in the water-containing gas by colliding with the water-containing gas when the water-containing gas collides with the separation plate (P), and
a discharge space (C1, C2) from which the water-containing gas that comes into contact with the separation plate (P) flows out is formed beside opposite ends of the separation plate (P),
**characterized in that**
the main portion (15, 16) of the separation plate (P) is arranged in such a way as to directly come into contact with the water-containing gas guided by the sloping guide section (13).

2. The gas-liquid separator according to Claim 1, wherein
the separation plate (P) includes: the main portion (15, 16) that protrudes from an upper inner surface of the housing (10) toward the water storage space (T) in such a way as to surround the sloping guide section (13); and a plurality of convex portions (15a) that protrude from the main portion (15, 16) toward the sloping guide section (13) and extend along a vertical direction, and
a collision plate (17) configured in such a way as to collide with the water-containing gas that flows out into the discharge space (C1, C2) is formed on the upper inner surface of the housing (10) and extends from the separation plate (P).

3. The gas-liquid separator according to Claim 1 or 2, wherein a gap (G) is formed between an inner surface of the housing (10) where the inlet port (1) is formed and the sloping guide section (13), and a sloping collecting passage (5) for discharging water in the gap (G) into the water storage space (T) is provided.

## Patentansprüche

1. Gas-Flüssigkeits-Abscheider umfassend:
ein Gehäuse (10), das einen Wasserspeicherraum (T) in einem Bodenabschnitt hat;
eine Einlassöffnung (1), die mit einem unteren Teil des Gehäuses (10) verbunden ist und durch die wasserhaltiges Gas eingeleitet wird;
einen geneigten Führungsabschnitt (13), der das durch die Einlassöffnung (1) zugeführte wasserhaltige Gas in einer Aufwärtsrichtung oberhalb des Wasserspeicherraums (T) in das Gehäuse (10) führt; und
eine Trennplatte (P), die eine kammartige Kontaktfläche aufweist, wobei
die kammartige Kontaktfläche an einem Hauptabschnitt (15, 16) der Trennplatte (P) ausgebildet ist, sich in einer vertikalen Richtung erstreckt und so konfiguriert ist, dass sie in dem wasserhaltigen Gas enthaltenes Wasser durch Zusammentreffen mit dem wasserhaltigen Gas abscheidet, wenn das wasserhaltige Gas auf die Trennplatte (P) trifft, und
ein Auslassraum (C1, C2), aus dem das wasserhaltige Gas, das mit der Trennplatte (P) in Kontakt kommt, ausströmt, neben entgegengesetzten Enden der Trennplatte (P) ausgebildet ist,
**dadurch gekennzeichnet, dass**
der Hauptabschnitt (15, 16) der Trennplatte (P) so angeordnet ist, dass er direkt mit dem wasserhaltigen Gas in Berührung kommt, das von dem geneigten Führungsabschnitt (13) geführt wird.

2. Gas-Flüssigkeits-Abscheider nach Anspruch 1, wobei
die Trennplatte (P) aufweist: den Hauptabschnitt (15, 16), der von einer oberen Innenfläche des Gehäuses (10) zu dem Wasserspeicherraum (T) hin derart vorsteht, dass er den geneigten Führungsabschnitt (13) umgibt; und eine Vielzahl von konvexen Abschnitten (15a), die von dem Hauptabschnitt (15, 16) zu dem geneigten Führungsabschnitts (13) hin vorstehen und sich entlang einer vertikalen Richtung erstrecken, und
eine Kollisionsplatte (17), die so eingerichtet ist, dass sie auf das wasserhaltige Gas, das in den Auslassraum (C1, C2) ausströmt, trifft, an der oberen Innenfläche des Gehäuses (10) ausgebildet ist und sich von der Trennplatte (P) aus erstreckt.

3. Gas-Flüssigkeits-Abscheider nach Anspruch 1 oder 2, wobei zwischen einer Innenfläche des Gehäuses (10), an der die Einlassöffnung (1) ausgebildet ist, und dem geneigten Führungsabschnitt (13) ein Spalt (G) ausgebildet ist und ein geneigter Sammelkanal (5) zum Ableiten von Wasser in dem Spalt (G) in den Wasserspeicherraum (T) vorgesehen ist.

## Revendications

1. Séparateur gaz-liquide comprenant :
un boîtier (10) ayant un espace de stockage d'eau (T) dans une partie inférieure ;
un orifice d'entrée (1) qui est relié à une partie inférieure du boîtier (10) et à travers lequel un gaz contenant de l'eau est introduit ;
une section de guidage en pente (13) qui guide le gaz contenant de l'eau fourni à travers l'orifice d'entrée (1) dans le boîtier (10) dans une direction vers le haut au-dessus de l'espace de stockage d'eau (T) ; et
une plaque de séparation (P) comportant une surface de contact en forme de peigne, dans laquelle
la surface de contact en forme de peigne est formée sur une partie principale (15, 16) de la plaque de séparation (P), s'étend dans une direction verticale et est configurée de manière à séparer de l'eau contenue dans le gaz contenant de l'eau en entrant en collision avec le gaz contenant de l'eau lorsque le gaz contenant de l'eau entre en collision avec la plaque de séparation (P), et
un espace d'évacuation (C1, C2), d'où s'écoule le gaz contenant de l'eau qui entre en contact avec la plaque de séparation (P), est formé à côté d'extrémités opposées de la plaque de séparation (P),
**caractérisé en ce que**
la partie principale (15, 16) de la plaque de séparation (P) est disposée de manière à entrer directement en contact avec le gaz contenant de l'eau guidé par la section de guidage en pente (13).

2. Séparateur gaz-liquide selon la revendication 1, dans lequel
la plaque de séparation (P) comporte : la partie principale (15, 16) qui fait saillie à partir d'une surface intérieure supérieure du boîtier (10) vers l'espace de stockage d'eau (T) de manière à entourer la section de guidage en pente (13) ; et une pluralité de parties convexes (15a) qui font saillie à partir de la partie principale (15, 16) vers la section de guidage en pente (13) et s'étendent le long d'une direction verticale, et
une plaque de collision (17), configurée de manière à entrer en collision avec le gaz contenant de l'eau qui s'écoule dans l'espace d'évacuation (C1, C2), est formée sur la surface intérieure supérieure du boîtier (10) et s'étend à partir de la plaque de séparation (P).

3. Séparateur gaz-liquide selon la revendication 1 ou 2, dans lequel un écart (G) est formé entre une surface intérieure du boîtier (10) où l'orifice d'entrée (1) est formé et la section de guidage en pente (13), et un passage collecteur en pente (5) pour évacuer l'eau dans l'écart (G) dans l'espace de stockage d'eau (T) est prévu.
